# EUROPÄISCHE PATENTSCHRIFT

(11) **EP 0 761 315 B1**
(45) Veröffentlichungstag und Bekanntmachung des Hinweises auf die Patenterteilung: **02.07.2003**
(21) Anmeldenummer: 96112985.5
(22) Anmeldetag: 13.08.1996
(51) Int. Cl.: B05B 15/04, C09J 7/02

(54) **Selbstklebende Schutzfolie**
Adhesive masking tape
Feuille de protection autocollante

(30) Priorität: 01.09.1995 DE 19532220
(43) Veröffentlichungstag der Anmeldung: 12.03.1997
(73) Patentinhaber: Tesa AG, 20253 Hamburg (DE)
(72) Erfinder: Malek, Wasfi, Dr., 22529 Hamburg (DE)

(56) Entgegenhaltungen:
- EP-A- 0 299 884
- EP-A- 0 519 278
- EP-A- 0 580 037
- EP-A- 0 592 913
- WO-A-91/06609
- FR-B- 2 600 981
- GB-A- 2 277 479
- US-A- 3 445 263

## Beschreibung

Die Erfindung betrifft eine selbstklebende Schutzfolie vorzugsweise zum Schutz des Abschlußlacks von Automobilen gegen unerwünschte Verschmutzungen und Beschädigungen während der Montage und des Transports.

Die Konservierung und der Schutz von Kraftfahrzeugen während des Transports vom Hersteller zum Händler wird schon seit geraumer Zeit praktiziert.
Bekannt ist, daß zum Konservieren von Automobilen Paraffinwachse in der Stärke von 5 bis 20 um aufgetragen werden. Es hat sich aber gezeigt, daß insbesondere bei waagerecht liegenden Flächen der Fahrzeuge eine derart dünne und zumeist ungleichmäßige Schicht gegen äußere Einflüsse, wie beispielsweise die ätzende Wirkung von Vogelkot, nicht genügend Schutz bietet.
Ein erheblicher Nachteil der Paraffinwachsversiegelung ist die notwendige Entkonservierung mittels Dampfstrahl, Tensiden oder Lösungsmitteln. Die umweltgerechte Rückgewinnug und Entsorgung der Rückstände verursachen einen großen apparativen Aufwand sowie sehr hohe Kosten.

Selbstklebende Oberflächenschutzfolien für Kraftfahrzeuge sind ebenfalls seit einiger Zeit bekannt. In den meisten Fällen handelt es sich dabei um permanent klebende Schutz- und Dekorfolien, wie zum Beispiel eine Steinschlagschutzfolie. Diese Selbstklebefolien verbleiben nach ihrer Montage permanent am Fahrzeug.

Reversibel klebende Selbstklebefolien zum Schutz des Automobils während des Transports haben bisher nur in einigen Sonderfällen ohne großen Erfolg Verwendung gefunden.

So wurde im Jahre 1977 eine Selbstklebefolie der Firma Beiersdorf AG, bestehend aus einer PVC-Folie mit einer vernetzten Selbstklebemasse aus Polyacrylat und Isocyanat, zum Schutz des Lacks auf der Frontpartie des Fahrzeugs gegen Steinschlag und Verschmutzungen durch aufprallende Insekten während des Einfahrvorgangs des Automobils verwendet. Die Anwendung erwies sich jedoch als problematisch, weil die Polyacrylatmasse sehr hochgradig vemetzt werden mußte, um keine Wechselwirkung mit dem Fahrzeuglack zu zeigen. Dies führte zu Anwendungsproblemen wegen unzureichender Haftfestigkeit der Folie.

Bekannt sind weiterhin Polyacrylatmassen, die unvemetzt sind und nach 16 Stunden bei 80 °C eine gute Verträglichkeit mit Lackoberflächen zeigen, die aber so weich sind, daß sie beim Abziehen der Folie Masserückstände auf dem Haftgrund hinterlassen. Sobald diese Massen chemisch oder strahlenvemetzt werden, lassen sie sich rückstandsfrei abziehen, verursachen aber auf der anderen Seite bleibende Deformationen an der Lackoberfläche.

Aus der japanischen Patentanmeldung JP 02 199 184 ist ein strahlenvernetzbarer Haftklebstoff bekannt, bei dem für die Schutzanwendung auf Lackschichten eine niedrige Glasübergangstemperatur eingestellt werden muß, um bleibende Verformungen der Lackschicht zu verhindern. Hier treten Probleme wegen mangelnder Haftfestigkeit der Selbstklebefolie auf Kraftfahrzeugen während des Transports und der Lagerung im Freien auf.

Die europäische Patentanmeldung EP 0 519 278 offenbart zum Schutz von Automobilen eine Folie, die aus einem Träger besteht, der mit einem Haftklebstoff auf Kautschukbasis, der ein dynamisches Elastizitätsmodul von 2 x 10⁵ bis 7 x 10⁶ dyn/cm², entspricht in SI-Einheiten einem Wert von 2 x 10⁴ bis 70 x 10⁴ Pa, bei 60 °C aufweist, beschichtet ist. Der Kleber kann darüber hinaus mit einem Silikonöl oder einem niedermolekularen Acrylpolymerisat abgemischt sein. Anwendungstechnische Versuche mit einer derartigen Selbstklebefolie zeigen eine relativ gute Verträglichkeit mit Lackoberflächen. Die Haftfestigkeit nach Wechselklimalagerung auf in der Automobilindustrie gebräuchlichen Lacken ist jedoch so gering, daß die in der Praxis geforderte Verklebungsfestigkeit nicht immer ausreichend gegeben ist. Insbesondere bei Feuchteeinfluß auf die Folie ist die Haftfestigkeit häufig derart reduziert, daß sich die Folie während des Transports der mit ihr geschützten Fahrzeuge von diesen ablöst, so daß keine Schutzwirkung mehr vorhanden ist. Darüber hinaus ist der genannte Elastizitätsmodulbereich kein hinreichendes Kriterium für einen gebrauchsfähigen Haftklebstoff.

Aufgabe der Erfindung war es, hier Abhilfe zu schaffen, insbesondere eine selbstklebende Schutzfolie zu schaffen, die die Nachteile des Stands der Technik nicht oder zumindest nicht in dem Umfang aufweist.

Gelöst wird diese Aufgabe durch eine selbstklebende Schutzfolie, wie sie in den Patentansprüchen näher gekennzeichnet ist.

Bei der erfindungsgemäßen Schutzfolie handelt es sich um eine selbstklebende Schutzfolie, die als Träger eine Folie besitzt, die mit einer Selbstklebemasse aus Polyethylenvinylacetat - je nach Typ und Compoundierung - mit einem Verlustwinkel tan δ von 0,6 bis 1,0, gemessen bei einer Temperatur von 60 °C und einer Frequenz von 10⁻² Hz, und von 0,4 bis 0,7, gemessen bei einer Temperatur von 60 °C und einer Frequenz von 10 Hz, beschichtet ist. Die Schutzfolie besitzt eine Dicke von 50 bis 200 µm, vorzugsweise 65 bis 80 um.

Die Folie besteht dabei bevorzugt aus Polypropylen, Polyethylen oder einem Gemisch der beiden Komponenten. Die Folie weist eine Dicke von 10 bis 100 µm, bevorzugt 50 bis 60 um, auf. Weiterhin ist die Folie in einer bevorzugten Ausführungsform halogenfrei. Zur Verbesserung der Abrolleigenschaften von einer großen Rolle kann die Folie auf ihrer Rückseite mit einem Trennlack versehen sein.

Zur Optimierung der Eigenschaften kann die Selbstklebemasse mit einem oder mehreren Additiven wie Kolophoniumester, Kohlenwasserstoffharzen, Paraffinölen, Alterungschutzmitteln oder Elastomeren abgemischt und darüber hinaus noch halogenfrei sein.

Zur Verbesserung der Verankerung der Klebmasse auf der Folie ist der Einsatz eines Primers möglich.

Für selbstklebende Schutzfolien ist der Einsatz unterschiedlicher Klebmassen möglich. Die meisten weisen jedoch gewichtige Nachteile auf, die deren Verwendung stark einschränken.

Entscheidende Entwicklungsgröße für ein Selbstklebesystem, das die an die Verwendung derartiger Schutzfolien geknüpften Bedingungen erfüllt, ist der rheologische Verlauf des compoundierten Selbstklebesystems. So sollte der Glasübergangspunkt, gekennzeichnet durch ein tan δ-Maximum, bei Temperaturen von -5 bis -25 °C liegen und im Maximum nahezu frequenzkonstant Werte bis maximal 1,0 annehmen. Dies sichert eine hervorragende Repositionierbarkeit aufgrund sehr niedriger Initialklebkraft. Bei Temperaturen oberhalb von 10 bis 30 °C, bevorzugt 20 °C, ist ein Anstieg des tan δ in Abhängigkeit von der Temperatur gefordert. So sollte bei 60 °C der tan δ bei 10⁻² Hz minimal 0,6 betragen, um bei 10 Hz auf minimal 0,4 abzufallen. Dies sichert den deutlichen Anstieg der Verklebungsfestigkeit bereits innerhalb der ersten 30 Minuten nach Verklebung.

Bekannte unpolare Selbstklebemassen aus Polyacrylat und Polyurethan zeigen im Test, in dem sie für 16 Stunden bei 80 °C auf lackierten Blechen aufgebracht sind, eine bessere Lackverträglichkeit als polare Massen. Auf der anderen Seite sind sie jedoch zu weich und zeigen Masserückstände beim Abziehen der Folie. Wenn die Massen strahlen- oder chemisch vernetzt sind, führen sie zu unerwünschter Lackdeformation.

Selbstklebemassen auf Naturkautschukharzbasis lassen sich rückstandsfrei bei nur sehr geringer Lackdeformation abziehen. Diese Massen sind allerdings unter Einwirkung von UV-Strahlung nicht alterungsstabil.

Eine Selbstklebemasse aus Polyisobutylen mit dem Verlustmodul G" von G" = 1,29 x 10⁶ dyn/cm², entspricht in Sl-Einheiten einem Wert von G" = 12,9 x 10⁴ Pa, und einem Verlustwinkel tan δ von 0,2 (beide Werte gemessen bei einer Temperatur von 60 °C und einer Frequenz von 1 Hz) zeigt nur sehr geringe Lackdeformationen. Allerdings ist die Abzugskraft von der Lackoberfläche nach Wechselklimalagerung sehr niedrig und somit nicht anwendungsgerecht.

Für den Fachmann nicht vorhersehbar zeigt eine auf einer Polypropylen/Polyethylenfolie ausgestrichene Selbstklebemasse aus Polyethylenvinylacetat mit einem Verlustwinkel tan δ von 0,6 bis 1,0, gemessen bei einer Temperatur von 60 °C und einer Frequenz von 10⁻² Hz, und von 0,4 bis 0,7, gemessen bei einer Temperatur von 60 °C und einer Frequenz von 10 Hz, die angestrebten Eigenschaften. Insbesondere auf einer 50 µm dicken Polypropylen/Polyethylenfolie, in der die beiden Polymere in einem Verhältnis von 9:1 bis 1:9, vorzugsweise 4:6, eingesetzt sind und die ein Vorstrich von Polyethylenvinylacetat aufweist, zeigt die erfindungsgemäße Selbstklebemasse auf mit Polyurethanlack lackierten und bei 130 °C getrockneten Blechen nach der Lagerung für 16 Stunden bei 80 °C keine Lackdeformation.

Die Abzugskraft der erfindungsgemäßen Schutzfolie von diversen Haftgründen liegt bei praxisgerechten 2 bis 5 N/cm. Auch die Bestrahlung der Schutzfolie mit UV-Licht, beispielsweise mit einer 500 W starken UV-Lampe mit Sonnenlichtspektrum über 5 Tage, führt zu keiner nachweisbaren Verschlechterung der Eigenschaften der Schutzfolie. Es tritt keine Versprödung auf, und die Selbstklebemasse verursacht weder Lackdeformationen noch treten Masserückstände beim Abziehen der Schutzfolie auf.

Darüber hinaus zeichnet sich die erfindungsgemäße Schutzfolie dadurch aus, daß sie in großer Breite über Motorhaube, Dach und Kofferraum des Automobils applizierbar ist und sich aufgrund ihrer Flexibilität planen und leicht sphärisch geformten Flächen sehr gut anpaßt. Damit ist der Schutz der am stärksten durch Verschmutzung gefährdeten horizontalen Flächen möglich. Aber auch schmale Bereiche wie zum Beispiel der Türvorsprung unter den Fenstern kann leicht abgedeckt werden. Der Schutz der vertikalen Flächen am Fahrzeug bietet sich besonders während der Montage derselben an.

Die Selbstklebemasse weist auf der einen Seite auf verschiedenen in der Automobilindustrie gebräuchlichen Einbrennlacken eine gute Haftfestigkeit auf, auch unter Feuchteoder Feuchtklimaeinfluß, so daß sich die Schutzfolie auch unter Windeinwirkung nicht vom Fahrzeug ablöst, auf der anderen Seite ist sie aufgrund sehr geringer Initialklebkraft reversibel klebend, so daß während der Applizierung eine Korrektur der Lage der Schutzfolie auf dem Fahrzeug möglich ist. Darüber hinaus zeigt die Selbstklebemasse einen deutlichen Anstieg der Verklebungsfestigkeit bereits innerhalb niedriger Initialklebekraft und innerhalb der ersten 30 Minuten nach Verklebung.

Die Schutzfolie ist beständig gegen Sonnenlicht, Feuchtigkeit, Hitze und Kälte, wobei die Witterungsstabilität bis zu einem halben Jahr gegeben ist.

Nach Anwendung der Schutzfolie treten durch die Selbstklebemasse nach einer Lagerung für 16 Stunden bei 80 °C sowie unter Witterungseinfluß keine Deformationen der darunter liegenden Lackschicht auf. Darüber hinaus gewährleistet die gleichmäßige Gesamtdicke der Schutzfolie im Vergleich zur Konservierung mit Wachs einen einwandfreien Schutz gegen Verschmutzungen und Beschädigungen des gesamten Fahrzeugs.

Nach Gebrauch ist die Schutzfolie trotz der geforderten guten Haftfestigkeit rückstandsfrei und ohne Reißen der Trägerfolie abziehbar. Da die Schutzfolie halogenfrei ist, ist eine stoffliche oder energetische Verwertung derselben problemlos möglich.

Im folgenden soll die Erfindung anhand von Beispielen erläutert werden, ohne diese damit allerdings unnötig einschränken zu wollen.

### Beispiele

### Beispiel 1

Eine Selbstklebemasse aus Polyethylenvinylacetat, die in Toluol mit einem Anteil von 15 % gelöst ist, mit einem Vinylacetatgehalt von 45 Gew.-% und mit einem Verlustwinkel tan δ von 0,8, der bei einer Temperatur von 60 °C und einer Frequenz von 10⁻² Hz gemessen wird, wird in einer Beschichtungsanlage mit Streichbalken und Trocknungskanal auf eine 50 µm starke, 1450 mm breite, beidseitig corona-vorbehandelte, mit Carbamatlack sowie mit EVA-Vorstrich versehene weiße Folie mit 15 g/m² aufgetragen, wobei die Folie zu 90 % aus Polypropylen und zu 10 % aus Polyethylen besteht. Die Trocknungstemperatur beträgt 60 bis 100 °C bei einer Verweilzeit von 3 Minuten. Am Kanalende wird die beschichtete Trägerbahn an den Kanten beschnitten und zu Stangen von 66 m Länge und 1400 mm Breite aufgewickelt.

Die so hergestellte Selbstklebefolie läßt sich bei Gebrauch zum Schutz von Automobilen faltenfrei abwickeln, einwandfrei applizieren und nach Gebrauch ohne Mängel wieder abziehen.

Das Material ist durch folgende physikalischen Eigenschaften gekennzeichnet:

| | |
|---|---|
| Gesamtdicke Schutzfolie: | 65 µm |
| Abzugskraft vom PU-Lack nach einer Lagerung für 16 Stunden bei 80 °C, einem Abzugswinkel kleiner 90° und einer Abzugsgeschwindigkeit von 300 mm/min: | 3,8 N/cm |
| Abzugskraft von der Rückseite bei einem Abzugswinkel kleiner 90° und einer Abzugsgeschwindigkeit von 300 mm/min: | 0,5 N/cm |

Die Messungen wurden mit einem Gerät der Firma Rheometric Scientific unter verformungskonstanten Bedingungen durchgeführt.

### Beispiel 2

Bezugnehmend auf Beispiel 1 werden zunächst 90 Gew.-% Polyethylenvinylacetat mit einem Vinylacetatgehalt von 45 Gew.-% und einem Verlustwinkel tan δ von 0,78 ( 60 °C und 10⁻² Hz) und 10 Gew.-% Kolophoniumester mit einem Erweichungspunkt von 85 °C vermischt, in Toluol mit einem Anteil von 15 % gelöst und entsprechend Beispiel 1 auf eine Folie, die zu 80 % aus Polypropylen und zu 20 % aus Polyethylen besteht, mit 12 g/m² beschichtet.

Das Material ist durch folgende physikalischen Eigenschaften gekennzeichnet:

| | |
|---|---|
| Gesamtdicke Schutzfolie: | 63 µm |
| Abzugskraft vom PU-Lack nach einer Lagerung für 16 Stunden bei 80°C, einem Abzugswinkel kleiner 90° und einer Abzugsgeschwindigkeit von 300 mm/min: | 3,1 N/cm |
| Abzugskraft von der Rückseite bei einem Abzugswinkel kleiner 90° und einer Abzugsgeschwindigkeit von 300 mm/min: | 0,4 N/cm |

### Beispiel 3

Eine Selbstklebemasse aus Polyethylenvinylacetat mit einem Vinylacetatgehalt von 45 Gew.-% und einem Verlustwinkel tan δ von 0,6 ( 60 °C und 10 Hz ) wird in einem Extruder mit Breitschlitzdüse in Coextrusion bei 160 bis 170 °C mit einer Schicht der aus Beispiel 1 bekannten Folie in der Breite von 1700 mm extrudiert, wobei die Selbstklebemasse mit 15 g/m² aufgetragen wird. Die Folie erhält eine Dicke von 52 µm auf. Anschließend wird diese im Verbund zu Rollen von 66 m Länge und 1500 mm Breite geschnitten.

Das Material ist durch folgende physikalischen Eigenschaften gekennzeichnet:

| | |
|---|---|
| Gesamtdicke Schutzfolie: | 67 µm |
| Abzugskraft vom PU-Lack nach einer Lagerung für 16 Stunden bei 80 °C, einem Abzugswinkel kleiner 90° und einer Abzugsgeschwindigkeit von 300 mm/min: | 3,2 N/cm |
| Abzugskraft von der Rückseite bei einem Abzugswinkel kleiner 90° und einer Abzugsgeschwindigkeit von 300 mm/min: | 0,5 N/cm |

### Beispiel 4

Bezugnehmend auf Beispiel 3 werden zunächst 90 Gew.-% Polyethylenvinylacetat mit einem Vinylacetatgehalt von 45 Gew.-% und einem Verlustwinkel tan δ von 0,58 ( 60 °C und 10 Hz ) und 10 Gew.-% Kolophoniumester mit einem Erweichungspunkt von 85 °C vermischt und entsprechend Beispiel 3 mit der aus Beispiel 1 bekannten eine Folie coextrudiert, wobei die Selbstklebemasse mit 19 g/m² aufgetragen wird. Die Folie erhält eine Dicke von 61 um auf.

### Das Material ist durch folgende physikalischen Eigenschaften gekennzeichnet:

| | |
|---|---|
| Gesamtdicke Schutzfolie: | 80 µm |
| Abzugskraft vom PU-Lack nach einer Lagerung für 16 Stunden bei 80 °C, einem Abzugswinkel kleiner 90° und einer Abzugsgeschwindigkeit von 300 mm/min: | 2,8 N/cm |
| Abzugskraft von der Rückseite bei einem Abzugswinkel kleiner 90° und einer Abzugsgeschwindigkeit von 300 mm/min: | 0,8 N/cm |

## Patentansprüche

1. Verwendung einer selbstklebenden Schutzfolie zum Schutz des Abschlußlacks von Automobilen, **dadurch gekennzeichnet, daß** auf einer Folie als Träger eine Selbstklebemasse aus Polyethylenvinylacetat mit einem Verlustwinkel tan δ von 0,6 bis 1,0, gemessen bei einer Temperatur von 60 °C und einer Frequenz von 10⁻² Hz, und von 0,4 bis 0,7, gemessen bei einer Temperatur von 60 °C und einer Frequenz von 10 Hz, aufgetragen ist.

2. Verwendung nach Anspruch 1, **dadurch gekennzeichnet, daß** die Schutzfolie eine Dicke von 50 bis 200 µm, vorzugsweise 65 bis 80 um, aufweist.

3. Verwendung nach Anspruch 1, **dadurch gekennzeichnet, daß** die Folie aus Polypropylen oder Polyethylen oder einem Gemisch der beiden Komponenten besteht.

4. Verwendung nach Anspruch 1, **dadurch gekennzeichnet, daß** die Folie eine Dicke von 10 bis 100 µm, bevorzugt 50 bis 60 um, aufweist.

5. Verwendung nach Anspruch 1, **dadurch gekennzeichnet, daß** die Folie halogenfrei ist.

6. Verwendung nach Anspruch 1, **dadurch gekennzeichnet, daß** die Folie auf der Rückseite mit einem Trennlack versehen ist.

7. Verwendung nach Anspruch 1, **dadurch gekennzeichnet, daß** die Selbstklebemasse mit einem oder mehreren Additiven wie Kolophoniumester, Kohlenwasserstoffharzen, Paraffinölen, Alterungsschutzmitteln oder Elastomeren abgemischt ist.

8. Verwendung nach Anspruch 1, **dadurch gekennzeichnet, daß** die Selbstklebemasse halogenfrei ist.

9. Verwendung nach Anspruch 1, **dadurch gekennzeichnet, daß** zwischen Folie und Selbstklebemasse ein Primer eingesetzt ist.

## Claims

1. Use of a self-adhesive protective film for protecting the finish of cars, **characterized in that** a self-adhesive composition of polyethylene vinyl acetate with a loss angle tan δ of from 0.6 to 1.0, measured at a temperature of 60°C and a frequency of 10⁻² Hz, and from 0.4 to 0.7, measured at a temperature of 60°C and a frequency of 10 Hz, is applied to a film backing.

2. Use according to Claim 1, **characterized in that** the protective film has a thickness of from 50 to 200 µm, preferably from 65 to 80 µm.

3. Use according to Claim 1, **characterized in that** the film consists of polypropylene or polyethylene or a mixture of the two components.

4. Use according to Claim 1, **characterized in that** the film has a thickness of from 10 to 100 µm, preferably from 50 to 60 µm.

5. Use according to Claim 1, **characterized in that** the film is halogen-free.

6. Use according to Claim 1, **characterized in that** the film is provided on the reverse side with a release coating.

7. Use according to Claim 1, **characterized in that** the self-adhesive composition is blended with one or more additives such as rosin esters, hydrocarbon resins, paraffin oils, anti-ageing agents or elastomers.

8. Use according to Claim 1, **characterized in that** the self-adhesive composition is halogen-free.

9. Use according to Claim 1, **characterized in that** a primer is employed between film and self-adhesive composition.

## Revendications

1. Utilisation d'une feuille de protection autoadhésive pour la protection de la laque de finition d'automobiles, **caractérisée en ce qu'**on a appliqué sur une feuille servant de support une masse autoadhésive en poly(éthylène-acétate de vinyle) présentant un angle de perte tan δ de 0,6 à 1,0, mesuré à une température de 60°C et une fréquence de 10⁻² Hz, et de 0,4 à 0,7, mesuré à une température de 60°C et une fréquence de 10 Hz.

2. Utilisation selon la revendication 1, **caractérisée en ce que** la feuille de protection présente une épaisseur de 50 à 200 µm, de préférence de 65 à 80 µm.

3. Utilisation selon la revendication 1, **caractérisé en ce que** la feuille est constituée de polypropylène ou de polyéthylène ou d'un mélange des deux composants.

4. Utilisation selon la revendication 1, **caractérisée en ce que** la feuille présente une épaisseur de 10 à 100 µm, de préférence de 50 à 60 µm.

5. Utilisation selon la revendication 1, **caractérisée en ce que** la feuille est exempte d'halogènes.

6. Utilisation selon la revendication 1, **caractérisée en ce que** la feuille est pourvue sur son dos d'une laque de séparation.

7. Utilisation selon la revendication 1, **caractérisée en ce que** la masse autoadhésive est mélangée avec un ou plusieurs additifs, tels que des esters de colophonium, des résines d'hydrocarbures, des huiles de paraffine, des agents de protection contre le vieillissement ou des élastomères.

8. Utilisation selon la revendication 1, **caractérisée en ce que** la masse autoadhésive est exempte d'halogènes.

9. Utilisation selon la revendication 1, **caractérisée en ce qu'**une couche de fond est utilisée entre la feuille et la masse autoadhésive.
